# EUROPÄISCHE PATENTANMELDUNG

(11) **EP 0 642 054 A1**
(43) Veröffentlichungstag der Anmeldung: **08.03.1995**
(21) Anmeldenummer: 94113023.9
(22) Anmeldetag: 20.08.1994
(51) Int. Cl.: G03B 27/54

(54) **Beleuchtungseinrichtung für Direktplattenbelichter**

(30) Priorität: 06.09.1993 DE 9313363 U
(71) Anmelder: HANS SIXT GmbH FEINMECHANIK, D-69190 Walldorf (DE)
(72) Erfinder: Müller, Friedrich, D-69231 Rauenberg (DE)
(74) Vertreter: Ratzel, Gerhard, Dr.

(57) **Zusammenfassung**

Die vorliegende Erfindung betrifft eine Beleuchtungseinrichtung für Direktplattenbelichter bei der zur Kompensation von Lichtbergen (Lichtüberschuß) auf der weissen diffus reflektierenden Rückwand (15) des Lichtkabinetts (4) schwarze Flächen (15a) als Lichtausgleiche angeordnet sind, die die Gestalt von Trapezen aufweisen, wobei die kürzere Trapezgrundlinie nicht gerade, sondern, unter Verringerung der Breite des Trapezes, teilkreisartig ausgebildet ist, so daß die stehengebliebenen, geradlinigen Endbereiche der Trapeze sogenannte Flachhöcker darstellen und daß ferner die links und rechts angeordneten Lichtspalte des Lichtkabinetts enger sind als die oben und unten angeordneten Lichtspalte.

## Beschreibung

Die Erfindung betrifft eine Beleuchtungseinrichtung für Direktplattenbelichter.

Beleuchtungseinrichtungen für Direktplattenbelichter sind dem Stand der Technik in vielfältiger Weise bekannt.

Zum näher kommenden Stand der Technik ist die deutsche Patentschrift 24 52 979 zu nennen, die eine Beleuchtungseinrichtung in einem Projektionskopiergerät zum Ausleuchten und zur Projektion einer Vorlage auf ein lichtempfindliches Aufzeichnungsmaterial mit einer Vorlagenbühne für die Aufnahme der Vorlage, mit zwei an den Längsseiten symmetrisch zur Mittellinie der Beleuchtungseinrichtung angeordneten Strahlungsquellen, die von Spiegelreflektoren teilweise umgeben sind, welche die einfallende Strahlung in Richtung weiterer Reflektoren reflektieren. Mit der Beleuchtungseinrichtung gemäß deutscher Patentschrift 24 52 979 soll das technische Problem gelöst werden, die Beleuchtungseinrichtung so zu verbessern, daß bei der Beleuchtung der Vorlage eine Abbildung derselben auf das Aufzeichnungsmaterial unter Vermeidung der Schattenbilder der Vorlagenkanten ohne Verringerung der Lichtausbeute erhalten wird.

Zum Stand der Technik wird ferner auf die europäische Patentschrift 0 216 330 hingewiesen, die eine Beleuchtungseinrichtung in einem Projektionskopiergerät zum Ausleuchten und zur Projektion einer Vorlage auf ein lichtempfindliches Aufzeichnungsmaterial, mit einer Vorlagenbühne für die Aufnahme der Vorlage, mit zumindest einer Strahlungsquelle, die von einem aus zwei Reflektorteilen bestehenden Reflektor teilweise umgeben ist, die an einer Trennstelle miteinander verbunden und voneinander lösbar sind und die einfallende Strahlung in Richtung der Vorlage reflektieren, beschreibt.

Demgegenüber liegt nun vorliegender Erfindung die Lösung des technischen Problems zugrunde, bei einer Beleuchtungseinrichtung für Direktplattenbelichter ein Original, das gegebenenfalls auch aus einer Klebemontage besteht, auf kleinstem Raum so auszuleuchten, daß die maximale Differenz auf der belichteten Platte, gemessen in einer 50%igen Rasterfläche von einem 60 Linien-Raster kleiner als 5 % ist.

Das maximale Format für Original und Platte beträgt vorzugsweise 615 x 750 mm.

Ferner liegt vorliegender Erfindung bei der Lösung des beschriebenen technischen Problems auch noch die Teilaufgabe zugrunde, den Lichtabfall des dabei verwendeten Weitwinkelobjektivs optimal zu kompensieren.

Schließlich liegt vorliegender Erfindung die weitere Teilaufgabe zugrunde, die insbesondere bei Klebemontagen auftretenden Schnittkanten bei der Fotografie nicht abzubilden, d. h. schnittkantenfrei zu fotografieren.

Die Lösung des oben genannten technischen Problems und der damit verbundenen Teilaufgaben ist mit den Vorrichtungen des Standes der Technik noch nicht befriedigend möglich gewesen. Dies gilt insbesondere auch für die Verwendung von Weitwinkelkameras bzw. Weitwinkelobjektiven, auf die sich die oben genannten Literaturstellen des Standes der Technik nicht beziehen.

Die Lösung des aufgezeigten technischen Problems, d. h. das Wesen der Erfindung ist aus den beiliegenden Ansprüchen zu entnehmen.

Anhand der beiliegenden Figuren 1 bis 4 erfolgt nun die Beschreibung der erfindungsgemäßen Beleuchtungseinrichtung.

Es zeigt:
- Figur 1: einen Längsschnitt durch die Kamera;
- Figur 2: einen Schnitt durch das Lichtkabinett;
- Figur 3: eine Vorderansicht des Lichtkabinetts ohne Verkleidung und
- Figur 4: eine Vorderansicht des Lichtkabinetts ohne Bildabschirmung und ohne Reflektoren.

In allen Figuren sind die gleichen Elemente mit den gleichen Bezugsziffern gekennzeichnet.

Mit dem Bezugszeichen:
1 ist der Kamerarahmen, mit
2 die Kameraverkleidung, mit
3 der Halter in Beschickungsposition, mit
4 das Lichtkabinett, mit
5 die Objektivgruppe, mit
6 der Umlenkspiegel, mit
7 der Plattentisch und mit
8 der horizontale Halbrundreflektor
bezeichnet.

Mit der Bezugsziffer:
9 ist ein 1000 Watt-Strahler und mit
10 ein 600 Watt-Strahler
bezeichnet.

Mit der Bezugsziffer:
11 ist ein vertikaler Halbrundreflektor, mit
12 die Schmalseite der Lichtabschirmung und mit
12a die Längsseite der Lichtabschirmung
gekennzeichnet.

Mit der Bezugsziffer:
13 ist die Plattenpositionierung
bezeichnet.

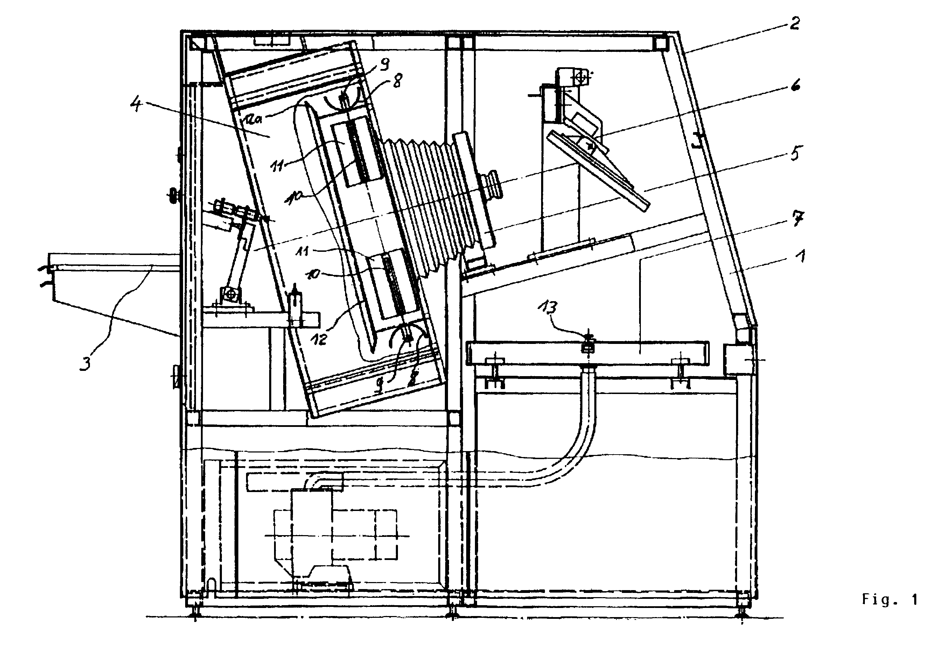

Die oben aufgeführten Bezugsziffern bzw. die damit bezeichneten Elemente sind in Figur 1 enthalten.

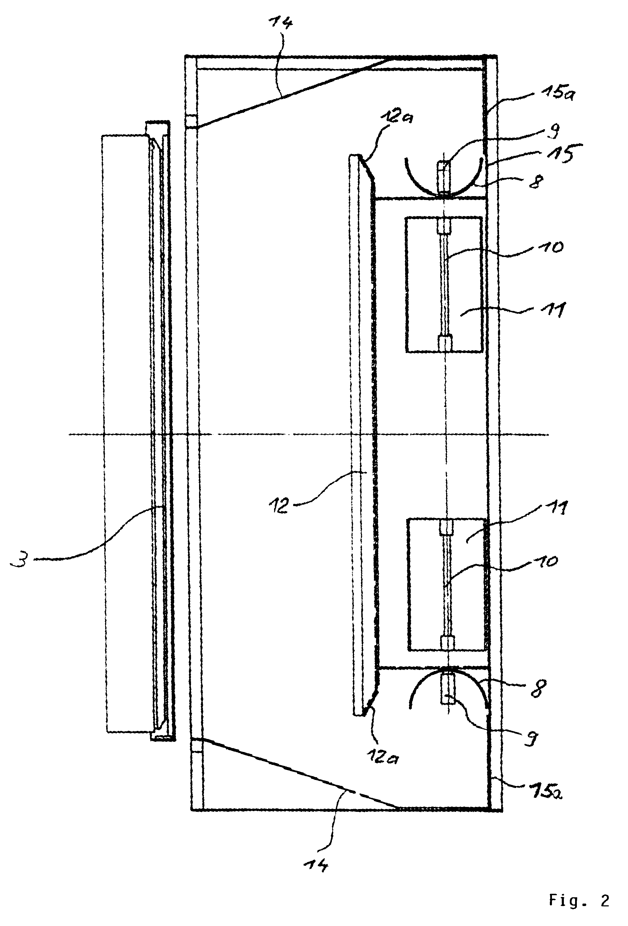

Figur 2, die einen Schnitt durch das Lichtkabinett (4) darstellt, enthält die folgenden, weiteren Elemente:
Den Reflektor 14, der oben und unten angeordnet ist, die weiße, nicht spiegelnde Rückwand 15 sowie den Lichtausgleich 15a.

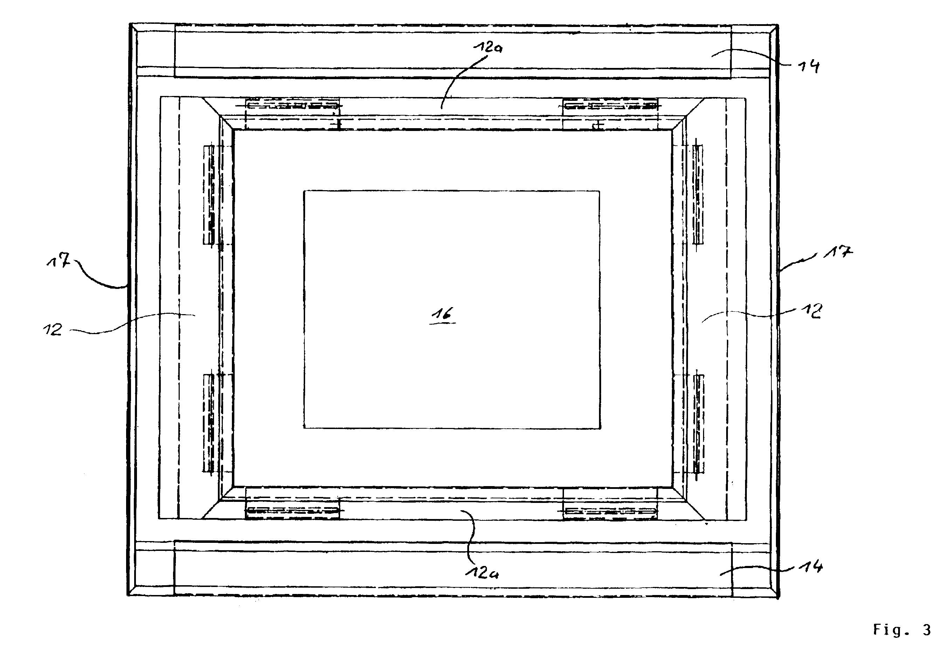

Die Figur 3 beinhaltet die folgenden, weiteren Elemente, nämlich den Balgausschnitt 16 und die weiße, diffus reflektierende Seitenwand 17.

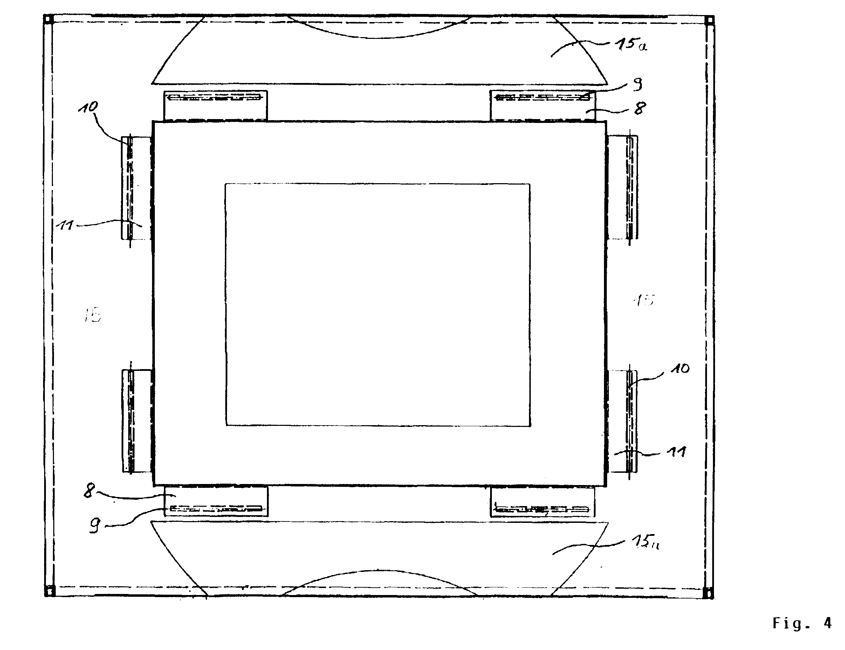

Wie bereits oben dargelegt, zeigt Figur 4 eine Vorderansicht des Lichtkabinetts (4) ohne die Lichtabschirmungen (12, 12a) sowie ohne die Reflektoren (14).

Das Konstruktions- und Funktionsprinzip der erfindungsgemäßen Beleuchtungseinrichtung für Direktplattenbelichter wird im folgenden beschrieben:
Je zwei an den Längsseiten oben und unten symmetrisch angeordnete 1000 Watt-Strahler (9) sind von halbschalenförmigen Reflektoren (8) teilweise umgeben, die wiederum das Licht auf die Rückwand (15) und die Reflektoren (14) reflektieren.

Von den Reflektoren (14) wird die einfallende Strahlung auf den Halter (3) reflektiert.

Ein direkter Lichteinfall wird durch die beiden Abdeckungen (12a) verhindert.

Lichtberge werden durch den wellenförmig ausgebildeten Lichtausgleich (15a) kompensiert.

An den beiden Schmalseiten rechts und links sind jeweils zwei 600 Watt-Strahler (10) symmetrisch angeordnet und mit halbschalenförmigen Reflektoren (11) teilweise umgeben, die das Licht auf die weiße, diffus reflektierende Rückwand (15) und auf die Seitenwand (17) reflektieren. Von der Seitenwand (17) wird die einfallende Strahlung auf den Halter (3) reflektiert. Ein direkter Lichteinfall wird auch hier durch die Abdeckung (12) verhindert.

Die Bezugsziffer (15) betrifft also die ganze, weisse, diffus reflektierende Rückwand des Lichtkabinetts (4), mit der Bezugsziffer (15a) sind jeweils die beiden Lichtausgleiche bezeichnet.

Über den oberen und unteren breiten Spalt und die dazugehörigen Spiegelreflektoren (14) wird der Hauptlichtanteil auf das Original reflektiert.

Die Lichtmenge, die über die diffus reflektierenden Seitenwände (17) und die schmalen Spalte auf das Original reflektiert wird, dient hauptsächlich zum Wegbelichten der Schnittkanten und als ausgleichender Lichtanteil.

Die in den Figuren 1 bis 4 dargestellten Ausführungsformen sind bevorzugte Ausführungsformen der Erfindung.

## Patentansprüche

1. Beleuchtungseinrichtung für Direktplattenbelichter, dadurch gekennzeichnet,
daß zur Kompensation von Lichtbergen (Lichtüberschuß) auf der weissen diffus reflektierenden Rückwand (15) des Lichtkabinetts (4) schwarze Flächen (15a) als Lichtausgleiche angeordnet sind, die die Gestalt von Trapezen aufweisen, wobei die kürzere Trapezgrundlinie nicht gerade, sondern, unter Verringerung der Breite des Trapezes, teilkreisartig ausgebildet ist, so daß die stehengebliebenen, geradlinigen Endbereiche der Trapeze sogenannte Flachhöcker darstellen und daß ferner die links und rechts angeordneten Lichtspalte des Lichtkabinetts (4) enger sind als die oben und unten angeordneten Lichtspalte.
